# EUROPEAN PATENT APPLICATION

(11) **EP 0 878 134 A2**
(43) Date of publication of application: **18.11.1998**
(21) Application number: 98108345.4
(22) Date of filing: 07.05.1998
(51) Int. Cl.: A23C 9/152, A23F 5/24

(54) **Milk beverages**

(30) Priority: 12.05.1997 JP 120751/97
(71) Applicant: MITSUBISHI CHEMICAL CORPORATION, Chiyoda-ku, Tokyo 100-0005 (JP)
(72) Inventor: Katsuragi,T. Mitsubishi Chem Corp Yokohama Res Cen, Kanagawa 227 (JP); Osaka,M. Mitsubishi Chem Corp Yokohama Res Center, Kanagawa 227 (JP)
(74) Representative: VOSSIUS & PARTNER

(57) **Abstract**

Milk beverages containing sucrose fatty acid esters and polyglycerol fatty acid esters having a degree of polymerization of polyglycerol of from 2 to 4; a method for depressing the foaming properties of milk beverages containing sucrose fatty acid ester containing at least 40% by weight of monoester, which method comprising adding polyglycerol fatty acid ester having a degree of polymerization of polyglycerol of thereto; and antifoaming agents for milk beverages containing sucrose fatty acid ester containing at least 40% by weight of monoester, said antifoaming agent comprising polyglycerol fatty acid ester having a degree of polymerization of polyglycerol of 2 to 4. These milk beverages can be stored for a long time and have less foaming properties. Further, they are free from the problems of sprouting-out from positive pressure cans at opening and overflow in the step of emulsification or filling during the production process.

## Description

This invention relates to milk beverages. More particularly, it relates to milk beverages containing sucrose fatty acid esters and polyglycerol fatty acid esters having a degree of polymerization of polyglycerol of from 2 to 4.

Milk beverages such as milk coffee and milk tea should be pasteurized for storage. However, some thermophilic spore-forming bacteria survive even after the pasteurization and cause putrefaction in some cases. To solve this problem, it is a common practice to add sucrose fatty acid esters to milk beverages to thereby inhibit the growth of thermophilic spore-forming bacteria, thus preventing putrefaction.

Among sucrose fatty acid esters, monoesters inhibit the growth of spore-forming bacteria. In particular, sucrose monopalmitate carrying palmitate group as a hydrophobic group exhibits the strongest effect. Namely, the effect of inhibiting the growth of spore-forming bacteria is elevated with an increase in the content of monoesters in sucrose fatty acid esters. However, milk beverages containing sucrose fatty acid esters rich in monoesters show enhanced foaming properties which result in some problems. Namely, these beverages overflow in the step of emulsification or filling during the production process thereof. When shaken during transportation, etc., moreover, these milk beverages foam up and, at the opening, therefore sprout out from the containers. In recent years, there arises a tendency to employ positive pressure cans having a thin wall and containing nitrogen gas, etc. introduced so as to elevate the inner pressure. In the case of these cans, it is frequently observed that milk beverages sprout out and soil hands or clothes.

Under these circumstances, it has been urgently required to develop milk beverages which contain sucrose fatty acid esters rich in monoesters and yet have depressed foaming properties.
According to the present invention it has been found that the foaming properties of milk beverages containing sucrose fatty acid esters can be regulated by adding polyglycerol fatty acid esters having a degree of polymerization of polyglycerol of from 2 to 4,

Accordingly, the gist of the present invention resides in a milk beverage which comprises milk components, a sucrose fatty acid ester containing at least 40% by weight of monoester, and a polyglycerol fatty acid ester having a degree of polymerization of polyglycerol of from 2 to 4.

The present invention provides, as a preferable embodiment thereof, the above-mentioned milk beverage wherein said polyglycerol fatty acid ester contains at least 50% by weight of monoester; the above-mentioned milk beverage wherein the content of said polyglycerol fatty acid ester is from 50 to 3,000 ppm; the above-mentioned milk beverage wherein the content of said sucrose fatty acid ester is from 50 to 2,000 ppm; the above-mentioned milk beverage which has a pH value of from 5.5 to 7.0; the above-mentioned milk beverage wherein the fatty acids constituting the monoester of said sucrose fatty acid ester are saturated fatty acids having 14 to 18 carbon atoms; the above-mentioned milk beverage wherein at least 30% by weight of the fatty acids constituting the monoester of said sucrose fatty acid ester is palmitic acid; and the above-mentioned milk beverage wherein at least 50% by weight of the fatty acids constituting said polyglycerol fatty acid ester is palmitic acid.

Further, the present invention provides, as another embodiment thereof, a method for depressing the foaming properties of a milk beverage containing sucrose fatty acid ester containing at least 40% by weight of monoester which comprises adding polyglycerol fatty acid ester having a degree of polymerization of polyglycerol of thereto; and the above-mentioned method wherein said polyglycerol fatty acid ester contains at least 50% by weight of monoester.

Furthermore, the present invention provides, as another embodiment thereof, an antifoaming agent for milk beverages containing sucrose fatty acid ester containing at least 40% by weight of monoester, said antifoaming agent polyglycerol fatty acid ester having a degree of polymerization of polyglycerol of from 2 to 4; and the above-mentioned antifoaming agent for milk beverages wherein said polyglycerol fatty acid ester contains at least 50% by weight of monoester.

Now, the present invention will be described in greater detail.

The milk components usable in the present invention, there can be exemplified cow's milk, whole milk powder, skimmed milk powder, fresh cream or the like. The concentration of milk components added to the milk beverage according to the present invention may be optionally selected.

The sucrose fatty acid ester usable in the present invention includes those containing at least 40% by weight, preferably at least 50% by weight, of monoester. These sucrose fatty acid esters have antibacterial properties. As the fatty acids constituting the sucrose fatty acid ester, use can be made of saturated or unsaturated fatty acids having 8 to 22 carbon atoms. Preferable examples thereof include myristic acid, palmitic acid, stearic acid, oleic acid, linoleic acid and linolenic acid. In particular, it is preferable that the fatty acids constituting the monoesters are saturated fatty acids having from 14 to 18 carbon atoms. The most desirable example thereof is one containing at least 30% by weight of palmitic acid which has a strong antibacterial activity. Since esters other than monoesters have no antibacterial activity [*Sofuto Dorinkusu Gijutsu Shiryo* (Technical Data on Soft Drinks), No. 112, 24 - 46, 1995], the fatty acids constituting other esters (i.e., diester or higher ones) are not particularly restricted but may be selected from the above-mentioned ones, etc. The average degree of esterification of the sucrose fatty acid ester usually ranges from 1 to 3, preferably from 1.1 to 2. The content of the sucrose fatty acid ester may vary depending on the milk components contained in the milk beverage without particular restriction, as long as the antibacterial effect and the emulsifying action can be both satisfactorily achieved. In general, the sucrose fatty acid ester is employed at a ratio of 100 ppm or above per percent of the milk components (in terms of milk), i.e., from 50 to 2,000 ppm in the milk beverage. Use can be also made of a mixture of two or more sucrose fatty acid esters.

The polyglycerol fatty acid ester usable in the present invention involves those having a degree of polymerization of polyglycerol of 2 to 4. It is preferable that the polyglycerol fatty acid ester contains at least 50% by weight of monoester. Although saturated and unsaturated fatty acids having from 8 to 22 carbon atoms are usable as the fatty acids constituting the polyglycerol fatty acid ester, saturated ones are preferable and palmitic acid is still preferable. The degree of polymerization of glycerol is preferably 2. It is also preferable to use one containing at least 50% by weight of palmitic acid. The average degree of esterification of the polyglycerol fatty acid ester usually ranges from 1 to 3, preferably from 1 to 2. Although the polyglycerol fatty acid ester may be added in an arbitrarily amount, its content preferably ranges from 50 to 3,000 ppm, still preferably from 100 to 1,000 ppm. When expressed in weight ratio by referring the content of the sucrose fatty acid ester as to 1, the content of the polyglycerol fatty acid ester usually ranges from 0.1 to 10, preferably from 0.2 to 5 and still preferably from 0.5 to 2. When the content of the polyglycerol fatty acid ester is too small, scarcely any defoaming effect can be achieved. When it is used in an excessively large amount, on the other hand, the taste of the milk beverage is worsened due to the undesirable waxy smell of the polyglycerol fatty acid ester.

Representative examples of the milk beverages of the present invention include milk coffee, milk tea, milk cocoa, etc., though the present invention is not restricted thereto. It is preferable that these milk beverages have a pH value of from 5.5 to 7.0 (i.e., weakly acidic). A milk beverage having an excessively low pH value is unfavorable, since it shows a sourness. On the other hand, alkaline ones are unusable as beverages. It is also possible to use in the milk beverages of the present invention emulsifiers and emulsion stabilizers other than the sucrose fatty acid esters and polyglycerol fatty acid esters as described above to establish stable emulsification or prevent sedimentation. Examples of these additives include polyglycerol fatty acid esters other than those as defined in the present invention, glycerol fatty acid esters, sorbitan fatty acid esters, organic acid monoglycerides, phospholipids such as lecithin, lactic acid fatty acid esters, carrageenan and locust bean gum.

The milk beverage according to the present invention can be produced by an ordinary method except that the aforementioned sucrose fatty acid ester and polyglycerol fatty acid ester are added thereto. For example, the milk coffee according to the present invention can be obtained by mixing the milk components, coffee extract, the sucrose fatty acid ester and the polyglycerol fatty acid ester, water and if necessary sweeting agents, or the like. If the pH of finally produced milk coffee is a value below the aforementioned range, sodium bicarbonate or the like may be added to the milk coffee composition in order to adjust the pH thereof to 5.5 to 7.0. Furthermore, if required, these milk beverage may be homogenized by using homogenizer or the like, and them pasteurized by retorting.

The milk beverages of the present invention may be packed in arbitrary containers. However, the effect of preventing sprouting-out from cans at opening, which is one of the effects achieved by the present invention, can be remarkably established when the milk beverages are packed in positive pressure cans with elevated internal pressure.

As described above in detail, the present invention provides milk beverages which can be stored for a long time and have less foaming properties. According to the milk beverages of the present invention, the sprouting-out from positive pressure cans at opening and overflow in the step of emulsification or filling during the production process can be relieved.

To further illustrate the present invention in greater detail, and not by way of limitation, the following Examples will be given. In the following Referential Examples and Examples, all percents are by weight.

### Referential Example 1: Production of polyglycerol fatty acid ester

700 g of diglycerol (manufactured by Sakamoto Yakuhin Kogyo) was reacted with 800 g of palmitic acid with the use of sodium hydroxide as a catalyst at 250°C for 2.5 hours. After removing the unreacted diglycerol by cooling, 368 g of a polyglycerol fatty acid ester was obtained by molecular distillation in the conventional manner. Table 1 shows the composition of the obtained product as well as that of the sucrose fatty acid ester employed in the following Examples and Comparative Examples.

**Table 1**

| | Sucrose fatty acid ester | Polyglycerol fatty acid ester |
|---|---|---|
| fatty acid composition | palmitic acid 70% | palmitic acid 100% |
| | stearic acid 30% | |
| monoester content | 75% | 70% |
| hydrophilic group | sucrose | diglycerol |
| degree of polymerization | - | 2 |

### Example 1: Preparation of milk coffee

64 g of a coffee extract (Extract Coffee F2: manufactured by Art Coffee), 64 g of skimmed milk powder (manufactured by Glico), 16 g of whole fat milk powder (manufactured by Hokkaido Nyugyo), 130 g of granulated sugar (manufactured by Meiji Seito), 1.2 g of sodium bicarbonate, 0.6 g of the sucrose fatty acid ester (P-1670, manufactured by Mitsubishi Kagaku Foods) of the composition as given in Table 1, 0.3 g of the polyglycerol fatty acid ester of the composition as given in Table 1 and water were mixed together to give a total amount of 2,000 g. The obtained mixture was homogenized with a high pressure homogenizer at 60°C under 150 kg/50 kg and then pasteurized by retorting at 121°C for 20 minutes to give a milk coffee product.

### Example 2: Preparation of milk coffee

The procedure of Example 1 was repeated but adding 0.6 g of the polyglycerol fatty acid ester to give a milk coffee product.

### Comparative Example 1: Preparation of milk coffee

The procedure of Example 1 was repeated but adding no polyglycerol fatty acid ester to give a milk coffee product.

### Example 3: Measurement of foaming volume

50 ml portions of the milk coffee products obtained in the above Examples 1 and 2 and Comparative Example 1 were each introduced into a 200 ml graduated cylinder. Then air was bubbled thereinto from a glass filter at a rate of 0.1 l/min and the foaming volume was measured. Table 2 shows the results.

**Table 2**

| | Foaming volume (ml) | | SE*¹ added (%) | POGE*² added (%) |
|---|---|---|---|---|
| | after 1 min | after 2 min | | |
| Comparative Example 1 | 110 | 110 | 0.03 | 0 |
| Example 1 | 80 | 90 | 0.03 | 0.015 |
| Example 2 | 65 | 65 | 0.03 | 0.03 |

| | | | | |
|---|---|---|---|---|
| *1: SE : sucrose fatty acid ester | | | | |
| *2: POGE : polyglycerol fatty acid ester | | | | |

The data given in the above Table 2 indicate that the products prepared by using the polyglycerol fatty acid ester (Examples 1 and 2) each showed a remarkably decreased foaming volume, compared with the one containing the sucrose fatty acid ester alone (Comparative Example 1).

### Referential Example 2: Monoester content in sucrose fatty acid ester and foaming power

The procedure of Example 1 was repeated but adding the sucrose fatty acid esters as shown in Table 3 and no polyglycerol fatty acid ester to give milk coffee products. 100 ml portions of these products were taken up, adjusted to 60°C and 20°C and introduced into 100 ml test tubes. Then each test tube was vertically overturned 100 times by hand and the height of the foam thus formed was measured, thus evaluating the foaming power. The foaming power was determined after overturning 100 times. Table 3 shows the results.

**Table 3**

| Sucrose fatty acid ester | Monoester content | Foaming power(mm) | |
|---|---|---|---|
| | | 60°C | 20°C |
| S-1670 | 80% | 24 | 6 |
| S-1170 | 60% | 19 | 4 |
| S-1170 : S-570 = 1 : 1 | 45% | 16 | 2 |
| S-1170 : S-570 = 1 : 4 | 35% | 9 | 0 |

In the above Table 3, S-1670, S-1170 and S-570 (each manufactured by Mitsubishi Kagaku Foods) were composed of 30% of palmitic acid and 70% of stearic acid and carried sucrose as the hydrophilic group. S-570 contained 30% of monoester.

These data indicate that milk beverage products containing the sucrose fatty acid esters containing 40% by weight or more of monoester largely foamed up unless the polyglycerol fatty acid ester was added.

### Example 4: Degree of polymerization of polyglycerol fatty acid ester and foaming power

64 g of a coffee extract (Extract Coffee F2: manufactured by Art Coffee), 64 g of skimmed milk powder (manufactured by Glico), 16 g of whole fat milk powder (manufactured by Hokkaido Nyugyo), 130 g of granulated sugar (manufactured by Meiji Seito), 1.2 g of sodium bicarbonate, 0.03 g of the sucrose fatty acid ester (P-1670, manufactured by Mitsubishi Kagaku Foods) of the composition as given in Table 1, 0.3 g of each polyglycerol fatty acid ester of the composition as given in Table 3 and water were mixed together to give a total amount of 2,000 g. The obtained mixture was homogenized with a high pressure homogenizer at 60°C under 150 kg/50 kg and then pasteurized by retorting at 121°C for 20 minutes to give a milk coffee product. 100 ml portions of these products were taken up, adjusted to 60°C and 20°C and introduced into 100 ml test tubes. Then each test tube was vertically overturned 100 times by hand and the height of the foam thus formed was measured, thus evaluating the foaming power. The foaming power was determined after overturning 100 times. Table 4 shows the results.

**Table 4**

| Polyglycerol fatty acid ester | Degree of polymerization | Foaming power(mm) | |
|---|---|---|---|
| | | 60°C | 20°C |
| Poem J2081 | 2 | 16 | 2 |
| TS8 | 4 | 18 | 2 |
| HS11 | 6 | 22 | 5 |
| DS13W | 10 | 24 | 10 |
| none | | 24 | 9 |

In the above Table 4, Poem J2018 (manufactured by Riken Vitamin) was composed of 52% of stearic acid, 43% of palmitic acid, 4% of myristic acid and 1% of others and contained 70% of monoester. On the other hand, TS8, HS11 and DS13W (each manufactured by Mitsubishi Kagaku Foods) were composed of 52% of stearic acid, 43% of palmitic acid, 4% of myristic acid and 1% of others and contained 70% of monoester.

These data indicate that the degree of polymerization of the polyglycerol fatty acid ester preferably falls within the range of 2 to 4.

### Example 5: Content of polyglycerol fatty acid ester and foaming power

The procedure of Example 1 was repeated but adding the polyglycerol fatty acid ester of the composition as given in Table 1 in the amounts as specified in Table 5 to give milk coffee products. 100 ml portions of these products were taken up, adjusted to 60°C and 20°C and introduced into 100 ml test tubes. Then each test tube was vertically overturned 100 times by hand and the height of the foam thus formed was measured, thus evaluating the foaming power. The foaming power was determined after overturning 100 times. Table 5 shows the results.

**Table 5**

| Polyglycerol fatty acid ester added (ppm) | Foaming power(mm) | |
|---|---|---|
| | 60°C | 20°C |
| 5,000 | 21 | 7 *3 |
| 3,000 | 19 | 5 *4 |
| 1,000 | 16 | 3 |
| 500 | 14 | 0 |
| 100 | 17 | 2 |
| 50 | 19 | 4 |
| 0 | 24 | 9 |

| | | |
|---|---|---|
| *3: polyglycerol fatty acid ester was not dispersed but precipitated | | |
| *4: polyglycerol fatty acid ester was not dispersed but partly precipitated | | |

These data indicate that the content of the polyglycerol fatty acid ester preferably falls within the range of 50 to 3,000 ppm.

### Example 6: Content of monoester in polyglycerol fatty acid ester and foaming power

The procedure of Example 1 was repeated but adding the polyglycerol fatty acid esters as shown in Table 6 to give a content of 0.05% to give milk coffee products. 100 ml portions of these products were taken up, adjusted to 60°C and 20°C and introduced into 100 ml test tubes. Then each test tube was vertically overturned 100 times by hand and the height of the foam thus formed was measured, thus evaluating the foaming power. The foaming power was determined after overturning 100 times. Table 6 shows the results.

**Table 6**

| Polyglycerol fatty acid ester | Monoester content (%) | Foaming power(mm) | |
|---|---|---|---|
| | | 60°C | 20°C |
| TS8 | 70 | 18 | 2 |
| TS4 | 30 | 22 | 3 *5 |

| | | | |
|---|---|---|---|
| *5 : waxy matters floated up to the surface | | | |

In Table 6, TS4 (manufactured by Mitsubishi Kagaku Foods) was composed of 52% of stearic acid, 43% of palmitic acid, 4% of myristic acid and 1% of others and had a degree of polymerization of 4.

These data indicate that the content of monoester in the polyglycerol fatty acid ester is preferably 50% or above.

While the invention has been described in detail and with reference to specific examples thereof, it will be apparent to one skilled in the art that various changes and modifications can be made therein without departing from the spirit and scope thereof.

## Claims

1. A milk beverage composition which comprises milk components, a sucrose fatty acid ester containing at least 40% by weight of monoester, and a polyglycerol fatty acid ester having a degree of polymerization of polyglycerol of from 2 to 4.

2. The milk beverage composition as claimed in Claim 1, wherein said polyglycerol fatty acid ester contains at least 50% by weight of monoester.

3. The milk beverage composition as claimed in Claim 1 or 2, wherein the content of said polyglycerol fatty acid ester is from 50 to 3,000 ppm.

4. The milk beverage composition as claimed in any of Claims 1 to 3, wherein the content of said sucrose fatty acid ester is from 50 to 2,000 ppm.

5. The milk beverage composition as claimed in any of Claims 1 to 4, which has a pH value of from 5.5 to 7.0.

6. The milk beverage composition as claimed in any of Claims 1 to 5, wherein the fatty acids constituting the monoester of said sucrose fatty acid ester are saturated fatty acids having 14 to 18 carbon atoms.

7. The milk beverage composition as claimed in any of Claims 1 to 6, wherein at least 30% by weight of the fatty acids constituting the monoester of said sucrose fatty acid ester is palmitic acid.

8. The milk beverage composition as claimed in any of Claims 1 to 7, wherein at least 50% by weight of the fatty acids constituting said polyglycerol fatty acid ester is palmitic acid.

9. A method for depressing the foaming properties of a milk beverage composition comprising sucrose fatty acid ester containing at least 40% by weight of monoester, said method comprising adding polyglycerol fatty acid ester having a degree of polymerization of polyglycerol of from 2 to 4 thereto.

10. The method as claimed in Claim 1, wherein said polyglycerol fatty acid ester contains at least 50% by weight of monoester.

11. An antifoaming agent for milk beverage composition containing sucrose fatty acid ester containing at least 40% by weight of monoester, said antifoaming agent comprising polyglycerol fatty acid ester having a degree of polymerization of polyglycerol of 2 to 4.

12. The antifoaming agent for milk beverages as claimed in Claim 11, wherein said polyglycerol fatty acid ester contains at least 50% by weight of monoester.
